Europäisches Patentamt

European Patent Office

Office européen des brevets

(19)

(11) Veröffentlichungsnummer: **0 297 470**
**A2**

(12) **EUROPÄISCHE PATENTANMELDUNG**

(21) Anmeldenummer: 88110162.0

(22) Anmeldetag: 25.06.88

(51) Int. Cl.⁴: **B23D 33/10** , **B23D 47/06** , **B21D 43/26**

(30) Priorität: 30.06.87 DE 3721530

(43) Veröffentlichungstag der Anmeldung:
**04.01.89 Patentblatt 89/01**

(84) Benannte Vertragsstaaten:
**AT BE CH ES FR GB IT LI NL**

(71) Anmelder: **Chr. Eisele Maschinenfabrik GmbH & Co. KG.**
**Nürtinger Strasse 9 - 15**
**D-7316 Köngen(DE)**

(72) Erfinder: **Lauffer, Adelbert**
**Odenwaldstrasse 2**
**D-7410 Reutlingen 28(DE)**

(74) Vertreter: **Hoeger, Stellrecht & Partner**
**Uhlandstrasse 14c**
**D-7000 Stuttgart 1(DE)**

(54) Pneumatisch angetriebener Anschlag für vorgeschobene Werkstücke.

(57) Ein pneumatisch angetriebener Anschlag für vorgeschobene Werkstücke weist einen Pneumatikzylinder mit einer verschieblichen Kolbenstange auf, an welcher ein Anschlag befestigt ist. Ein mit der ausgefahrenen Kolbenstange zusammenwirkender Endanschlag legt die Sollstellung des Anschlages fest. Ein Präzisions-Grenztaster zum Abfühlen der Sollstellung des Anschlages liefert beim Herausbewegen des Anschlages aus seiner Sollstellung ein Schaltsignal. Von diesem Signal wird ein mit dem Pneumatikzylinder verbundenes Ventil gesteuert, welches den Zylinder drucklos mit der Atmosphäre verbindet, wenn der Anschlag in Sollstellung ist und noch kein Werkstück an ihm anliegt, welches den Zylinder mit Druck beaufschlagt, sobald der Anschlag durch ein vorgeschobenes Werkstück aus seiner Sollstellung herausbewegt ist, so daß der Anschlag unter Mitnahme des Werkstückes in die Sollstellung zurückkehrt, und welches diesen Druck während vorbestimmter Zeit aufrecht erhält.

FIG. 1

EP 0 297 470 A2

## Pneumatisch angetriebener Anschlag für vorgeschobene Werkstücke

Die Erfindung betrifft einen pneumatisch angetriebenn Anschlag für vorgeschobene Werkstücke.

Im Verlauf einer gewerblichen Fertigung müssen häufig Werkstücke zwecks Ausrichtung an einen Anschlag angelegt werden. Beispielsweise gilt dies für den Fall, daß von einem oder mehreren Rohren Stücke bestimmter Länge abgeschnitten werden müssen, wobei die bestimmte Länge dem Abstand zwischen dem Anschlag und einem Sägeblatt entspricht. Die bestimmte Länge kann um so genauer eingehalten werden, je genauer das vorgeschobene Werkstück am Anschlag zur Anlage gebracht wird.

Ein Problem, das bei diesem Vorgang beherrscht werden muß, besteht darin, daß die Werkstücke oft eine beträchtliche Masse haben und mit beträchtlicher Geschwindigkeit zum Anschlag hin vorgeschoben werden, so daß Vorkehrungen getroffen werden müssen, um stoßartige Abbremsvorgänge zu verhindern, die zu einer Beschädigung des Anschlages oder der Werkstücke führen könnten.

Es ist Aufgabe der Erfindung, einen pneumatisch angetriebenen Anschlag für vorgeschobene Werkstücke so auszubilden, daß mit einfachen Mitteln eine genaue Positionierung der Werkstücke möglich ist, auch wenn diese mit erheblicher Kraft auf dem Anschlag auftreffen.

Die Aufgabe wird erfindungsgemäß durch folgende Merkmale gelöst:

a) ein Pneumatikzylinder mit einer verschieblichen Kolbenstange, an welcher der Anschlag befestigt ist;

B) ein mit der ausgefahrenen Kolbenstange zusammenwirkender Endanschlag zur Festlegung der Sollstellung des Anschlages;

C) ein Grenztaster zum Abfühlen der Sollstellung des Anschlages und zur Abgabe eines Signals beim Herausbewegen des Anschlages aus der Sollstellung;

D) ein mit dem Pneumatikzylinder verbundenes, vom Grenztaster gesteuertes Ventil, welches

1. den Zylinder drucklos mit der Atmosphäre verbindet, wenn der Anschlag in Sollstellung ist und noch kein Werkstück an ihm anliegt,

2. den Zylinder mit Druck beaufschlagt, sobald der Anschlag durch ein vorgeschobenes Werkstück aus seiner Sollstellung herausbewegt ist, so daß der Anschlag unter Mitnahme des Werkstückes in die Sollstellung zurückkehrt, und

3. diesen Druck während vorbestimmter Zeit aufrecht und damit den Anschlag in Sollstellung hält.

Die nachstehende Beschreibung einer bevorzugten Ausführungsform der Erfindung dient im Zusammenhang mit beiliegender Zeichnung der weiteren Erläuterung. Es zeigen:

Fig. 1 eine schematische, teilweise aufgeschnittene Ansicht eines pneumatisch angetriebenen Anschlages für vorgeschobene Werkstücke;

Fig. 2 eine Schnittansicht entlang der Linie 2-2 in Fig. 1 und

Fig. 3 und 4 schematische Darstellungen der Wirkungsweise des Anschlages und seiner Steuerung.

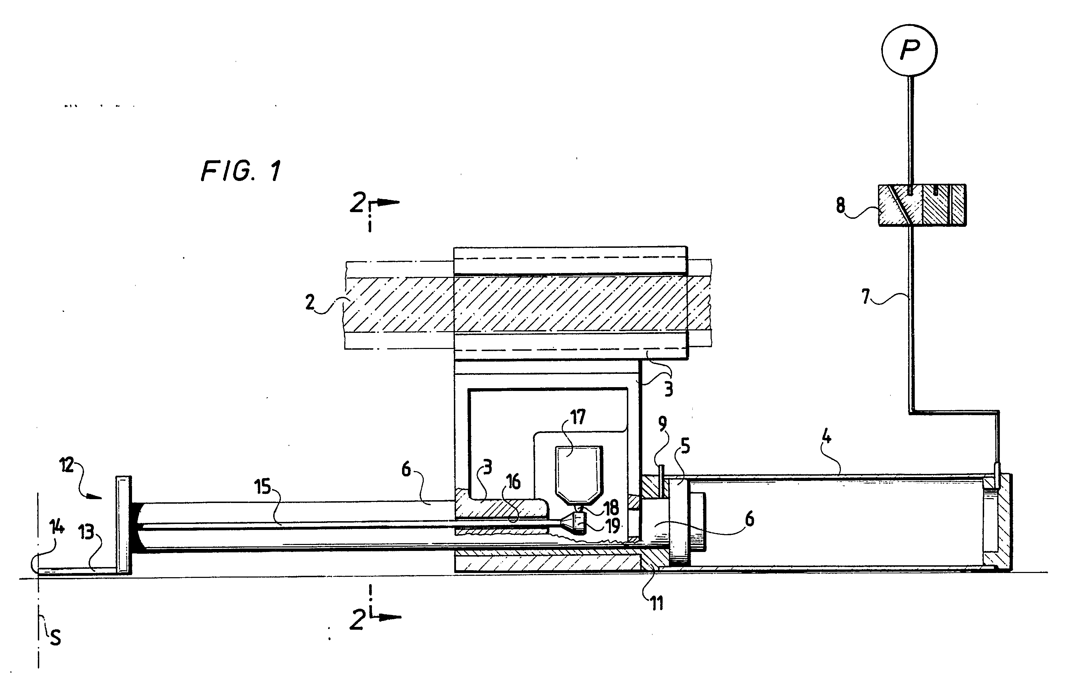

An einer mit einem Maschinengestell 1 fest verbundenen, horizontal angeordneten Gleitführungsschiene 2 ist ein Schlitten 3 hin- und herverschieblich geführt. Mit der Rückseite des Schlittens 3 ist fest ein mit seiner Achse ebenfalls horizontal ausgerichteter Pneumatikzylinder 4 verbunden, in dem ein Kolben 5 mit Kolbenstange 6 gleit verschieblich ist. In einer Druckluft-Zuführleitung 7 ist ein elektrisch ferngesteuertes Ventil 8 angeordnet, das die Leitung 7 wahlweise mit einer Druckluftquelle P verbindet oder von dieser abtrennt. Der Zylinder 4 ist weiterhin mit einer Entlüftungsleitung 9 verbunden, über die nötigenfalls in bekannter Weise auch Druckmittel zugeführt werden kann, um den Kolben 5 (in Fig. 1 nach rechts) zurückzuschieben.

Eine vordere Stirnwand 11 des Zylinders 4 dient als Endanschlag für den Kolben 5. Dieser Endanschlag kann in bekannter Weise mit einem Tastmittel, beispielsweise mit einem berührungslosen Schalter versehen sein, welcher beim Anliegen des Kolbens 5 an den von der Sitrnwand 11 gebildeten Endanschlag die Druckmittelzufuhr über die Leitung 7 abschaltet, so daß der Kolben 5 durch den im Zylinder 4 herrschenden Druck in dieser Endposition gehalten ist.

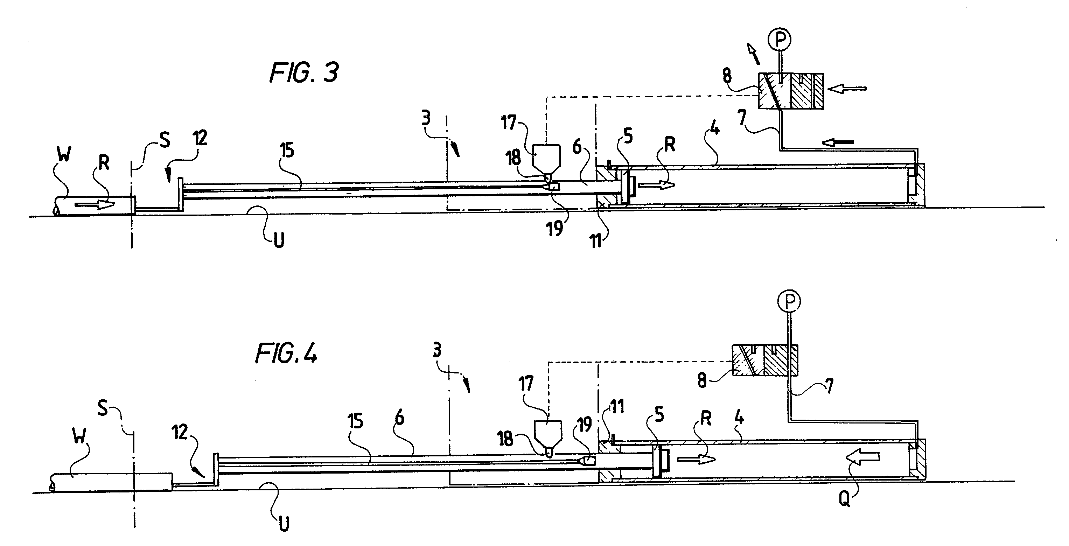

Mit dem freien Ende der Kolbenstange 6 ist fest ein L-förmiger Anschlag 12 verbunden, dessen unterer horizontal gerichteter Schenkel 13 mit seiner vorderen Stirnkante 14 die eigentliche Anschlagfläche für anzulegende Werkstücke W bildet (Fig. 3 und 4).

Die eingestellte Sollstellung, in der die Werkstücke W an den Anschlag 12 angelegt werden sollen, ist in Fig. 1, 3 und 4 durch eine strichpunktierte Linie S angedeutet. Um den Anschlag 12 in die Sollstellung zu verbringen, wird zunächst der Kolben 5 und mit ihm die Kolbenstange 6 so weit aus dem Zylinder 4 herausgefahren, bis der Kolben an dem von der Stirnfläche 11 gebildeten Endanschlag anschlägt und in dieser Position bleibt. Anschließend wird der Schlitten 3 und mit ihm der Zylinder 4 auf der Schiene 2 so lange verschoben, bis die vordere Stirnkante 14 des Anschlages 12 mit der Linie S deckungsgleich ist und festgestellt.

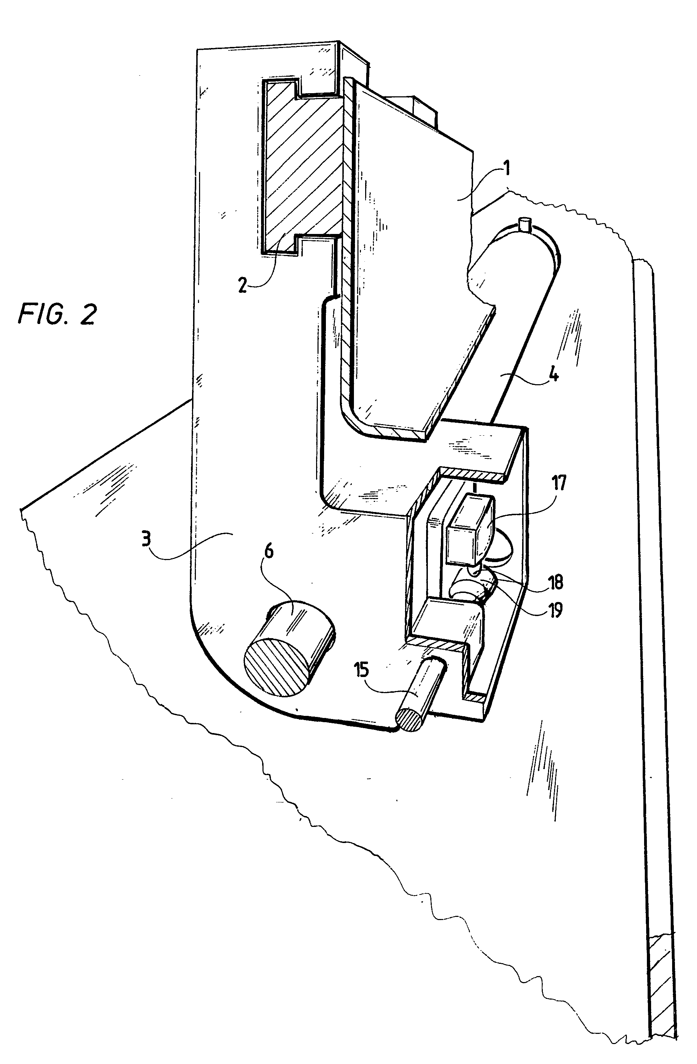

Wie insbesondere aus Fig. 2 hervorgeht, ist mit dem Anschlag 12 eine parallel zur Kolbenstange 6 verlaufende, weitere. dünnere Stange 15 verbunden, die an ihrem rückwärtigen, vom Anschlag 12 abgekehrten Endabschnitt in einer Gleitführung 16 des Schlittens 3 verschieblich geführt ist. Am Schlitten 3 ist ein Grenztaster 17 befestigt, dessen Auslösestift 18 mit einem an der Stange 15 angeordneten Endstück 19 zusammenwirkt. In der in Fig. 1 dargestellten Stellung ist der Auslösestift 18 vom Endstück 19 in einer bestimmten Position gehalten. Sobald sich der Kolben 5 und mit ihm die Kolbenstange 6 und der Anschlag 12 (in Fig. 1 nach rechts) verschieben, löst sich das Endstück 19 vom Auslösestift 18, so daß der Grenztaster 17 zur Abgabe eines Signals veranlasst wird. Der Grenztaster 17 ist, wie in Fig. 3 gestrichelt angedeutet, mit dem Ventil 8 durch eine Betätigungsleitung verbunden und steuert hierdurch die Positionierung dieses Ventils in noch zu beschreibender Weise.

Im Betrieb der beschriebenen Anschlagsvorrichtung wird von der in Fig. 1 angenommenen Position ausgegangen, in welcher der Anschlag 12 in seiner Sollstellung ist und der Kolben 5 an der einen Endanschlag bildenden Stirnwand 11 des Zylinders 4 anliegt. Die Stange 15 befindet sich in solcher Lage, daß das an ihr vorgesehene Endstück 19 den Auslösestift 18 und damit den Grenztaster 17 in bestimmter Weise betätigt. Das Ventil 8 ist in solcher Stellung, daß die Leitung 7 zur Atmosphäre hin entlüftet wird, der hinter dem Kolben 5 gelegene Innenraum des Zylinders 4 also "drucklos" ist. Nunmehr wird (in Fig. 3 von links her) ein Werkstück W in Pfeilrichtung - manuell oder maschinell - auf einer geeigneten Unterlage U vorgeschoben, bis es auf den Anschlag 12 trifft und diesen geringfügig mitnimmt, so daß der Anschlag etwas aus seiner Sollstellung (Linie S) zurückverschoben wird. Hierdurch wird die Stange 15 relativ zu dem mit dem Schlitten 3 fest verbundenen Grenztaster 17 verschoben, so daß sich das Endstück 19 vom Auslösestift 18 löst und der Grenztaster 17 ein entsprechendes Signal gibt, aufgrund dessen das Ventil 8 aus der in Fig. 3 dargestellten Stellung in diejenige gemäß Fig. 4 gelangt. In dieser Stellung ist die Druckluftpumpe P mit dem Zylinder 4 verbunden. Druckluft strömt nunmehr über die Leitung 7 in den Zylinder 4 und baut in diesem einen Druck auf, welcher auf den Kolben ein- und damit der Vorschubbewegung des Werkstückes W entgegenwirkt (vergl. die Pfeile P und Q in Fig. 3 und 4). Somit kommt die Vorschubbewegung allmählich zum Stillstand und der weiterhin in Richtung des Pfeiles P wirkende Druck schiebt nunmehr den Kolben 5 und damit den Anschlag 12 entgegen der Vorschubrichtung zurück, bis der Kolben an der Stirnwand 11 des Zylinders 4 anschlägt und der Grenztaster 17 wiederum vom Endstück 19 betätigt ist. In dieser Stellung hat der Anschlag 12 wieder seine Sollstellung eingenommen, so daß nunmehr die mit ihm zurückverschobenen Werkstücke ebenfalls ihre Sollposition einnehmen und bearbeitet, beispielsweise abgesägt werden können.

Nach dem erneuten Ansprechen des Grenztasters 17 wird über ein entsprechendes Zeitsteuerglied der Druck im Zylinder 4 während bestimmter Zeitdauer aufrechterhalten, so daß der Anschlag 12 und mit ihm das Werkstück W in Sollstellung verharren, bis die vorzunehmende Werkstückbehandlung ausgeführt ist. Anschliessend wird das behandelte Werkstück entnommen, das Ventil 8 kehrt nach Ablauf der bestimmten Zeitdauer in die Stellung gemäß Fig. 3 zurück, so daß nunmehr ein weiteres Werkstück zugeführt werden kann.

Wenn das Werkstück W manuell gegen den Anschlag 12 vorgeschoben wird, unterbindet man den Vorschub dann, wenn der Anschlag um ein kleines Wegstück aus seiner Sollstellung zurückverschoben ist. Bei maschinellem Vorschub kann der Grenztaster 17 gleichzeitig auch den weiteren Vorschub unterbinden, so daß das Werkstück W, beispielsweise unter Trägheitswirkung, nur noch ein kleines Stück vorrückt und dann sofort durch die in den Zylinder 4 einströmende Druckluft abgefangen wird.

In jedem Falle erreicht man mit der beschriebenen Ausbildung des Anschlags und seiner Steuerung ein abgedämpftes, weiches Auffangen des Werkstückes unter Zurückweichung des Anschlags 12 und ein präzises Zurückführen des Werkstückes in seine Sollstellung.

## Ansprüche

A) ein Pneumatikzylinder (4) mit einer verschieblichen Kolbenstange (6), an welcher der Anschlag (12) befestigt ist;

B) ein mit der ausgefahrenen Kolbenstange (6) zusammenwirkender Endanschlag (Stirnwand 11) zur Festlegung der Sollstellung (S) des Anschlages;

C) ein Grenztaster (17) zum Abfühlen der Sollstellung (S) des Anschlages (12) und zur Abgabe eines Signals beim Herausbewegen des Anschlages aus der Sollstellung;

D) ein mit dem Pneumatikzylinder (4) verbundenes, vom Grenztaster (17) gesteuertes Ventil (8), welches

    1. den Zylinder (4) drucklos mit der Atmosphäre verbindet, wenn der Anschlag (12) in Sollstellung (S) ist und noch kein Werkstück (W) an ihm anliegt,

2. den Zylinder (4) mit Druck beaufschlagt, sobald der Anschlag (12) durch ein vorgeschobenes Werkstück (W) aus seiner Sollstellung (S) herausbewegt ist, so daß der Anschlag unter Mitnahme des Werkstückes in diese Sollstellung zurückkehrt, und

3. diesen Druck während vorbestimmter Zeit aufrecht erhält.

FIG. 1

FIG. 2

FIG. 3

FIG. 4

EP 0 297 470 A2